(19) Europäisches Patentamt
European Patent Office
Office européen des brevets

(11) **EP 4 707 848 A1**

(12) **EUROPEAN PATENT APPLICATION**

(43) Date of publication:
**11.03.2026 Bulletin 2026/11**

(21) Application number: **25200420.5**

(22) Date of filing: **05.09.2025**

(51) International Patent Classification (IPC):
$G01S\ 7/02$ $^{(2006.01)}$    $G01S\ 13/32$ $^{(2006.01)}$
$G01S\ 13/42$ $^{(2006.01)}$   $G01S\ 13/58$ $^{(2006.01)}$
$G01S\ 13/66$ $^{(2006.01)}$   $G01S\ 13/931$ $^{(2020.01)}$

(52) Cooperative Patent Classification (CPC):
**G01S 13/931; G01S 7/023; G01S 13/325;
G01S 13/42; G01S 13/584; G01S 13/66**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **06.09.2024 US 202418826433**

(71) Applicant: **NXP B.V.
5656 AG Eindhoven (NL)**

(72) Inventors:
• **FOCANTE, Edoardo
5656AG Eindhoven (NL)**
• **MYERS, Nitin Jonathan
5656AG Eindhoven (NL)**
• **PANDHARIPANDE, Ashish
5656AG Eindhoven (NL)**
• **JOSEPH, Geethu
5656AG Eindhoven (NL)**

(74) Representative: **Hardingham, Christopher Mark
NXP Semiconductors
Intellectual Property Group
The Cattle Barn
Upper Ashfield Farm, Hoe Lane
Romsey, Hampshire SO51 9NJ (GB)**

Remarks:
A request for correction of the drawings has been filed pursuant to Rule 139 EPC. A decision on the request will be taken during the proceedings before the Examining Division (Guidelines for Examination in the EPO, A-V, 3.).

(54) **MAP-AWARE MIMO SPACE-TIME RADAR CIRCUITS AND METHODS**

(57)    Radar systems and methods are disclosed that utilize a space-time waveform including shaped beams with time-domain codes to determine objects in a viewing area. A radar system may include one or more transmitter circuits to transmit toward a viewing area a space-time waveform including one or more shaped beams with time-domain codes, one or more receiver circuits to receive reflected signals related to the space-time waveform, and a radar processor. The radar processor may retrieve pre-determined occupancy data identifying a location of an object relative to the radar system; determine, using the pre-determined occupancy data, a beamforming weight vector; determine, using the pre-determined occupancy data, one or more time-domain codes; generate the space-time waveform including one or more shaped beams including the one or more time-domain codes and based on the beamforming weight vector; and transmit, using the one or more transmitter circuits, the space-time waveform toward the viewing area.

FIG. 1

EP 4 707 848 A1

## Description

FIELD OF USE

The present disclosure generally relates to radar systems, circuits and methods, and more particularly, to map-aware multiple-input multiple output (MIMO) active sensing methods and circuits, such as space-time radar circuits, light-detection and ranging (LiDAR) circuits, ultrasound circuits, other active sensing circuits, and so on.

BACKGROUND

Automotive radar solutions for advanced driver assistance systems (ADAS) are currently being deployed on a large scale and are typically implemented as long-range radar (LRR) applications or short-range radar (SRR) applications. Both of these applications typically use frequency modulated continuous wave (FMCW) modulation techniques in order to be able to identify objects in the vicinity of the radar system, such as a vehicle or a pedestrian. Such radar systems typically utilize millimeter wave (mmWave) frequencies for transmission and reception of radar signals. The same or similar radar technology may also be used in robotic systems, security systems, and other systems that utilize data associated with objects in one or more areas surrounding the radar system.

A radar system may be configured to transmit electromagnetic signals in one or more directions and to receive reflections of the transmitted signal from objects that disrupt the electromagnetic signals. The time delay variations transmission of the signals and reception of the signal reflections (and variations between the timing of the different signal reflections) can be determined and used to determine the distances of objects, the speeds of the objects, or any combination thereof that cause the reflections. For example, in automotive applications, automotive radar systems can be used to determine the distance, the speed, and other parameters of objects in the direction of travel of the vehicle, such as oncoming vehicles and other obstacles, and may communicate that data to other systems. In some automative applications, data from the automotive radar system may enable advanced driver-assistance system functionality, such assisted cruise control, emergency braking, blind spot monitoring and alerts, lane assistance, other functionality, or any combination thereof, and eventually may enable fully autonomous driving platforms.

BRIEF DESCRIPTION OF THE DRAWINGS

The detailed description is set forth with reference to the accompanying figures. In the figures, the left-most digit(s) of a reference number identifies the figure in which the reference number first appears. The use of the same reference numbers in different figures and in the detailed description indicates similar or identical items or features.

FIG. 1 depicts a radar system that may be configured to perform interference suppression, in accordance with various embodiments.

FIG. 2 depicts a conceptual diagram of a radar system including an input to receive an occupancy grid map and a lane topology map and receivers to receive reflected time-code information to reduce sidelobe interference, in accordance with various embodiments.

FIG. 3 depicts a lane topology map and a drivable space map determined by system including a radar system, in accordance with various embodiments.

FIG. 4A depicts a graph of autocorrelation level versus autocorrelation lag for a Chu waveform used in a conventional radar system.

FIG. 4B depicts a graph of autocorrelation level versus autocorrelation lag for the radar system of FIGs. 1-2, in accordance with various embodiments.

FIG. 5A depicts a graph of probability of detection versus probability of false alarm for a Chu waveform (sequence) and for the radar system of FIGs. 1-2 with a signal-to-noise ratio of 10 decibels, in accordance with various embodiments.

FIG. 5B depicts a graph of probability of detection versus probability of false alarm for a Chu waveform (sequence) and for the radar system of FIGs. 1-2 with a signal-to-noise ratio of 0 decibels, in accordance with various embodiments.

FIG. 6A depicts a graph of a matched filter output versus time lag / range bin for a Zadoff-Chu sequence.

FIG. 6B depicts a graph of the matched filter output for a designated sequence of the radar system of FIGs. 1-2, in accordance with various embodiments.

FIG. 7 depicts a flow diagram of a method of generating an occupancy map based on space-code data and time-code data, in accordance with various embodiments.

While implementations are described in this disclosure by way of example, those skilled in the art will recognize that the implementations are not limited to the examples or figures described. Rather, the figures and detailed description thereto are not intended to limit implementations to the form disclosed, but instead the intention is to cover all modifications, equivalents, and alternatives falling within the scope as defined by the appended claims. The headings used in this disclosure are for organizational purposes only and are not meant to limit the scope of the description or the claims. As used throughout this application, the word "may" is used in a permissive sense (in other words, the term "may" is intended to mean "having the potential to") instead of in a mandatory sense (as in "must"). Similarly, the terms "include," "including," and "includes" mean "including, but not limited to."

DETAILED DESCRIPTION

Automotive radar systems can access rich side-information about a driving scene being sensed in the form of occupancy maps. Radar systems, methods, and devices described herein may be configured to dynamically design space-time codes at the radar transmitter using knowledge of occupancy map information and lane topology information. In one or more embodiments, the radar system may be configured to use beamforming to transmit beams to determine the probability of objects in areas where targets may be located and to configure time-domain codes for transmission in the shaped beams. The radar system may receive reflected signals, determine the space-domain data and the time-domain data, and utilize the separate space-domain data and time-domain data to achieve higher detection rates than conventional automotive radar systems.

Radar technology is used in automotive systems, in autonomous robotic systems, and in other applications for detection and perception of objects. In one or more embodiments, an automotive radar system and method may be configured to utilize adaptive beamforming of transmitted radar signals to enable more power efficient operations and to improve object detection of automotive radar systems. In one or more embodiments, the radar system may be configured to shape spatial domain beams to enhance the strength of returns from cells associated with a higher uncertainty of occupancy, and time-domain waveforms may be optimized to minimize the correlation between returns of targets within the drivable space. The space-and time-domain optimizations achieve a higher detection probability than a radar employing standard waveforms.. In one or more embodiments, the radar system may be configured to combine space-time codes and time-domain codes to determine a space-time waveform according to pre-determined occupancy data, which may achieve higher detection rates than conventional space-time waveforms that do not rely on prior occupancy information (time-domain data or time-domain codes).

Radar systems may be used as sensors in a variety of different applications, including but not limited to automotive radar sensors for road safety and vehicle control systems, such as advanced driver-assistance systems (ADAS) and autonomous driving (AD) systems. In one or more other embodiments, the radar systems may be used in robotic systems, such as for autonomous movement, safety systems, such as for manufacturing systems, industrial process control, or other systems in which proximity of objects (including people) may be detected and used for hazard mitigation.

The following detailed description is merely illustrative in nature and is not intended to limit the embodiments described herein and uses of such embodiments. Furthermore, there is no intention to be bound by any expressed or implied theory presented in the preceding technical field, background, or the following detailed description.

For simplicity and clarity of illustration, the figures illustrate the general manner of construction. Descriptions and details of well-known features and techniques may be omitted from the following detailed description to avoid unnecessarily obscuring the present disclosure. For example, the dimensions of some of the elements or regions in the figures may be exaggerated relative to other elements or regions to help improve understanding of embodiments described herein.

The terms "first," "second," "third," "fourth" and the like in the description and the claims, if any, may be used for distinguishing between similar elements and not necessarily for describing a particular sequential or chronological order. It is to be understood that the terms so used are interchangeable under appropriate circumstances such that the embodiments described herein are, for example, capable of operation in sequences other than those illustrated or otherwise described herein. Furthermore, the terms "comprise," "include," "have" and any variations thereof, are intended to cover non-exclusive inclusions, such that a process, method, article, or apparatus that comprises a list of elements is not necessarily limited to those elements but may include other elements not expressly listed or inherent to such process, method, article, or apparatus. As used herein the terms "approximate," "approximately," "substantial" and "substantially" mean sufficient to accomplish the stated purpose in a practical manner and that minor imperfections, if any, are not significant for the stated purpose.

Along these lines, when used with references to measurable quantities including, but not limited to, dimensions, these terms mean that the quantities are equal to the values stated subject to accepted tolerances of any methods or apparatus chosen to fabricate the described structures or measure the quantities or dimensions described. Directional references such as "top," "bottom," "left," "right," "above," "below," and so forth, unless otherwise stated, are not intended to require any preferred orientation and are made with reference to the orientation of the corresponding figure or figures for purposes of illustration. As used herein, the words "exemplary" and "example" mean "serving as an example, instance, or illustration." Any implementation described herein as exemplary or an example is not necessarily to be construed as preferred or advantageous over other implementations. In addition, certain terms may also be used herein for reference only, and thus are not intended to be limiting.

Herein, elements or nodes or features are sometimes referred to as being "connected" or "coupled" together. As used herein, unless expressly stated otherwise, "connected" means that one element is directly joined to (or directly communicates with) another element in an electrical or non-electrical manner, and not necessarily mechanically. Likewise, unless expressly stated otherwise, "coupled" means that one element is directly or indirectly joined to (or directly or indirectly communicates with) another element in an electrical or non-electrical manner, and not necessarily mechanically. Thus, although the schematic illustrations shown in the figures depict exemplary arrangements of elements, additional intervening elements, devices, features, or components may be present in one or more embodiments of the depicted subject matter.

Millimeter-wave radar is one of the main sensing modalities in current assisted and autonomous driving systems. Multiple-input multiple-output (MIMO) radar systems may be configured to shape the beam at the transmitter and to estimate the direction of arrival of reflections of the transmitted beams at the receiver. In one or more embodiments, the transmitter of the radar system may utilize information about the environment being sensed to shape the beam. In one or more embodiments, the information may include an occupancy grid map, which may include a grid of range-angle-Doppler cells, with the occupancy value in a cell being indicative of a probability that the real-world area represented by the cell may be occupied by an object. In one or more embodiments, the radar system may be configured to adjust its transmitted waveform based on the information contained in the occupancy map, for example, to direct beams toward the real-world area represented by a cell that has a probability with relatively high uncertainty (such as a cell in which the probability is near fifty percent) as indicated by the occupancy map.

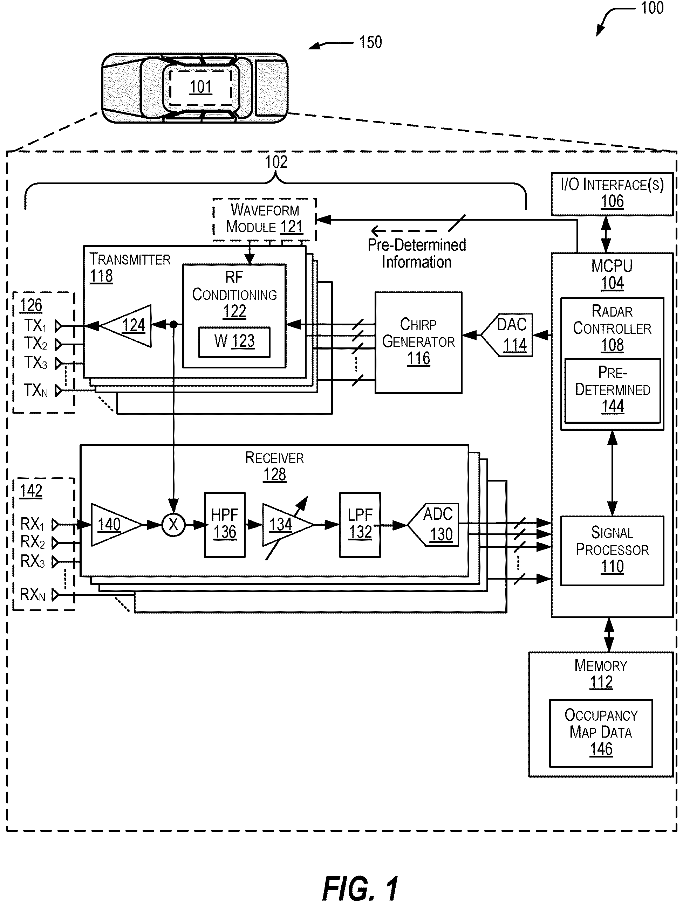

The radar system may utilize beamforming to enhance detection in cells with higher uncertainty, leveraging the occupancy maps for beamforming to focus power on regions of high occupational map uncertainty. At the same time, the radar system may encode time-domain codes into the beam to enhance target detection at the output of a temporal matched filter for targets within the areas of high occupational map uncertainty. The radar system may combine spatial-domain data and time-domain code data to produce an improved occupancy map that outperforms standard quasi-omnidirectional radar technologies and that outperforms a directional beamforming approach, especially in the context of multiple targets within the same angle bin. An example of such a radar system is described below with respect to FIG. 1.

FIG. 1 depicts a system 100 including a radar system 101 that may be configured to perform interference suppression, in accordance with various embodiments. The radar system 101 may include a radar device 102 (sometimes referred to herein as "radar communication circuitry" or "radar front-end circuitry") that may be coupled to a radar microcontroller and processing unit (MCPU) 104, where the MCPU 104 may be configured to provide an occupancy map and other data to a transmitter 118, which may use the occupancy map and the other data to generate one or more shaped beams, each of which may include encoded time-domain codes. The MCPU 104 may receive reflected signal data (including the time-domain codes) from a receiver circuit 128 and may utilize the time-domain codes to remove side-lobe interference and to enhance multi-target detection.

In one or more embodiments, the radar system 101 may be a Multiple-Input Multiple-Output (MIMO) radar system, such as a Linear Frequency Modulation (LFM) MIMO radar system (e.g., an LFM automotive MIMO radar system). In one or more embodiments, the radar device 102 may include radar front-end hardware. In one or more embodiments, the radar device 102 may be embodied as a line-replaceable unit (LRU) or modular component that is designed to be replaced quickly at an operating location. Similarly, the radar MCPU 104 may be embodied as a line-replaceable unit (LRU) or modular component. Although a single or mono-static radar devices are shown, it will be appreciated that additional distributed radar devices may be used to form a distributed or multi-static radar. In addition, the depicted radar system 101 may be implemented in integrated circuit form with the radar device 102 and the radar MCPU 104 formed on separate integrated circuits (chips) or on a single chip, depending on the application.

In accordance with various embodiments, the radar system 101 may be implemented as part of an automotive system in conjunction with an Advanced Driver Assistance System (ADAS) of a vehicle, such as a vehicle 150. It should be understood that components of the radar system 100 may be distributed at various locations on or within the vehicle 150 (e.g., with antennas located at one or more front, rear, or side panels of the vehicle 150, at front or rear bumpers of the vehicle 150, or at other suitable locations on the vehicle 150, or at a combination of such locations; with processing circuitry, transmitter modules, and receiver modules being disposed at one or more locations inside the vehicle 150). In one or more other embodiments, the radar system 101 may be implemented in a different device or system, such as a robotic system, a security system, or other systems that use dynamic object (target) detection.

The radar device 102 includes one or more transmitting antenna elements 126 (sometimes referred to herein as "transmit antennas") and receiving antenna elements 142 (sometimes referred to herein as "receive antennas") connected, respectively, to one or more radiofrequency (RF) transmitter (TX) circuits 118 and receiver (RX) circuits 128. Each transmit antenna 126 and TX circuit 118 may be associated with a respective transmit channel of a group of transmit channels designated herein as $TX_1, TX_2, TX_3, ... TX_M$, where $M$ is the total number of transmit (TX) channels. Each receive antenna 142 and RX circuit 128 may be associated with a respective receive channel of a group of receive channels designated herein as $RX_1, RX_2, RX_3, ... RX_N$, where $N$ is the number of receive (RX) channels. As a non-limiting example, the radar device 102 can include individual antenna elements (e.g., antenna elements 126) connected, respectively, to four transmitter modules (e.g., the transmitter circuits 118) and sixteen receiver modules (e.g., the receiver circuits 128). These quantities of transmitter and receiver antenna elements and modules are intended to be illustrative and not limiting, with other quantities of these elements being possible in one or more other embodiments, such as four transmitter circuits 118 and six receiver circuits 128, or a single transmitter circuit 118, a single receiver circuit 128, and so on.

The radar device 102 may include a chirp generator 116, which may be configured to supply chirp input signals to the transmitter circuits 118. The chirp generator 116 may be configured to receive input program and control signals, including, as non-limiting examples, a reference local oscillator (LO) signal, a chirp start trigger signal, and program control signals, from the MCPU 104 via a digital-to-analog converter (DAC) 114. The chirp generator 116 may be configured to generate chirp signals and to send the chirp signals to the transmitter circuits 118 via a digital-to-analog converter (DAC) 114 for transmission via the transmitting antenna elements 126.

In one or more embodiments, each transmitter circuit 118 may include an RF conditioning module 122 that may be configured to filter the chirp signals. In one or more embodiments, the RF conditioning module 122 may include one or more frequency multipliers configured to increase the frequency of chirp signals output by the chirp generator 116. In one or more embodiments, the RF conditioning module 122 of each of the transmitter circuits 118 may include beamforming circuitry configured to perform beamforming operations in the beam domain to enhance detection probability in areas where targets may be located and may incorporate time-domain codes to further enhance target detection.

Each transmitter circuit 118 includes a power amplifier 124 configured to amplify the filtered chirp signal before it is provided to and transmitted via one or more corresponding transmitting antenna elements 126. Herein, a transmitted chirp signal is sometimes referred to as a "transmit signal". The transmit signal may include time-domain codes that may be unique for each antenna element 126. Each transmitter element 126 may transmit a generated spatial-domain beam including the time-domain codes.

The radar signal transmitted by the transmitter circuits 118 and transmit antennas 126 may be reflected by an object in an environment of the radar device 102, and part of the reflected radar signal, sometimes referred to herein as a "return signal" or a "reflection", may be received by the receiving antenna elements 142 at the radar device 102. In one or more embodiments, the reflected radar signal received via one of the receiving antenna elements 142 and a corresponding one of the receiver circuits 128 corresponds to a chirp signal transmitted via one of the transmit antennas 126 and a corresponding transmitter circuit 118, and such a received radar signal may be referred to herein as a "chirp", "chirp signal", or "received chirp signal." Such a received chirp signal may include interference components attributable to one or more interference signals in the environment of the radar system 101.

At each receiver circuit 128, the received (radio frequency) antenna signal may be amplified by a low noise amplifier (LNA) 140 and then fed to a mixer 138 where it may be mixed with the transmitted chirp signal generated by the RF conditioning module 122. The resulting intermediate frequency signal may be fed to a high-pass filter (HPF) 136. The resulting filtered signal may be provided to a variable gain amplifier 134, which may amplify the signal before feeding it to a low pass filter (LPF) 132. This re-filtered signal may be fed to an analog-to-digital converter (ADC) 130 to produce a digital signal that is output by each receiver circuit 128 to a signal processor 110 of the MCPU 104. In this way, the receiver circuits 128 may compress the target echo of various delays into multiple sinusoidal tones with frequencies that may correspond to the round-trip delay of the echo.

In the radar system 101, the radar MCPU 104 may be coupled to the radar device 102. The radar MCPU 104 may be configured to supply input control signals to the radar device 102 for causing the transmitter elements 126 to transmit signals and may be configured to receive digital output signals generated by the receiver circuits 128 based on the reflections of the transmitted signals. In one or more embodiments, the radar MCPU 104 may include a radar controller 108 and a signal processor 110, either or both of which may be embodied as a microcontroller unit or other processing unit. The MCPU 104, the radar controller 108, and the signal processor 110 may each include or may be implemented by computer processing circuitry, in accordance with various embodiments.

The radar controller 108 may be configured to receive data from the radar device 102 (e.g., from the receiver circuits 128) and may control radar parameters of the radar device 102, such as frequency band, length of each radar frame, and the like via the DAC 114. To control the transmitter circuits 118, the radar controller 108 may, for example, be configured to generate transmitter input signals, such as program, control trigger, reference local oscillator (LO) signal(s), calibration signals, frequency spectrum shaping signals (such as ramp generation in the case of Frequency-Modulated Continuous Wave (FMCW) radar). The radar controller 108 may, for example, be configured to receive data signals, sensor signals, and/or register programming or state machine signals for RF (radio frequency) circuit enablement sequences.

The signal processor 110 may be configured and arranged for signal processing tasks such as, but not limited to, target object identification, interference mitigation, computation of the distance or range to a target object, computation of the radial velocity of a target object, and computation of the angle of arrival (AoA) of signals reflected by a target object, and the like. Herein, the term "AoA" or "Angle-of-Arrival" refers to the angle of a reflected signal (e.g., a radar signal) incident on an antenna array. In one or more embodiments, the signal processor 110 MCPU 104 may be configured to generate occupancy map data based on the received digital output signals from the receiver circuits 128. The signal processor 110 can provide calculated values associated with such computations to a storage 112 (such as occupancy map data 146), to other systems via one or more input/output (I/O) interfaces 106, or any combination thereof.

The one or more I/O interfaces 106 may enable the MCPU 104 to communicate with other systems over local and wide area networks, the Internet, automotive communication buses, other devices, or any combination thereof. In one or more embodiments, the I/O interfaces 106 may include or may be coupled to network communication interfaces, such as wired communication interfaces (e.g., an RJ 45 port, Ethernet cabling, a coaxial connector, coaxial cabling, fiber optic connectors, fiber optic cabling, other ports, other cabling types, or any combination thereof) or wireless RF communication interfaces (e.g., an 802.11x radio frequency transceiver, a Bluetooth transceiver, other radio frequency transceivers, or any combination thereof). In one or more embodiments, the MCPU 104 can provide the calculated values over the interface 106 to other systems, such as a radar-camera-lidar fusion system; an automated driving assistance system including parking, braking, or lane-change assistance features; and the like. The storage 112 can be used to store instructions for the MCPU 104, received data from the radar device 102, calculated values from the signal processor 110 (including occupancy map data 146), other data, or any combination thereof. Storage 112 may be any suitable storage device, such as a volatile or non-volatile computer-readable memory.

At each receiver circuit 128, digital output signals are generated from target return signals for digital processing by the signal processor 110 to construct and accumulate multiple-input multiple-output (MIMO) array vector outputs forming a MIMO aperture for use in computing plots or maps for AoA estimation and target object tracks. In particular, the signal processor 110 may perform one or more interference suppression processes (e.g., which may include one or more recursive thresholding processes as described herein) on the digital output signals before processing the resultant interference-suppressed samples using one or more Fast Fourier Transform (FFT) modules or Discrete Fourier Transform (DFT) modules, such as a fast-time (range) FFT module.

Processing by these modules of the signal processor 110 generates a range chirp antenna cube (RCAC) and a slow-time (Doppler) FFT module which generates a range-Doppler antenna cube (RDAC) (e.g., including range-Doppler response maps for each RX antenna). The signal processor 110 may then perform Constant False Alarm Rate (CFAR) detection on the range-Doppler antenna cube to detect peaks in the RDAC. The signal processor 110 may further process the RDAC based on the detected peaks to construct a MIMO array vector which the signal processor 110 then processes to perform AoA estimation and target object tracking. The MCPU 104 may then output the resulting target tracks (e.g., via the interface 106) to other automotive computing or user interfacing devices for further processing or display.

In the illustrated example, the radar device 102 may include an automotive radar with co-located transmitter circuits 118 and receiver circuits 128. In one or more embodiments, the antenna elements 126 and 142 may be uniformly-spaced linear arrays of antenna elements. In one or more embodiments, the antenna elements may be spaced apart from one another by a half-wavelength distance or another spacing. The transmitter circuit 118 may be implemented as a fully digital architecture with $N$ isotropic transmitter elements 126 may include, and the receiver circuit 128 may include a digital array of $N$ isotropic antenna elements 142. The transmitter circuit 118 may periodically transmit a burst of $M$ pulses in one radar coherent processing interval (CPI). The transmitter circuit 118 may be configured to radiate different waveforms from each transmitter element 126. The transmitted pulses may impinge $K$ point targets within the field of view of the radar device 102.

In one or more embodiments, one or more of the signal processor 110 or the radar controller 108 may determine a space-time waveform (coding matrix) $W$ 144, which may include beamforming weights at each fast-time sampling instant at the transmitter circuit 118. The signal processor 110 or the radar controller 108 may be configured to generate the space-time waveform (coding matrix) $W$ so as to detect targets reliably within the drivable space by exploiting the occupancy map data 146. The transmitter circuit 118 may use the space-time waveform $W$ 144 to generate the different waveforms for radiating by the transmitter elements 126.

In one or more embodiments, the transmitter circuits 118 may perform beamforming operations by determining a set of weights (arranged as columns of $W$), which may be determined by a waveform module 121, which may be part of the transmitter circuit 118 or which may be part of the MCPU 104. The waveform module 121 may be configured to receive pre-determined information from the MCPU 104 or from another source, which may include data related to objects or targets in a viewing area of the radar system 101. The waveform module 121 may be configured to determine occupancy data corresponding to the viewing area based on the pre-determined information and to use that information to dynamically design space-time codes that can be used to generate a space-time waveform that can be transmitted by the antenna elements 126. Specifically, the waveform module 121 may determine space-domain data that can be used to produce the beamforming weight matrix $W$ and including time-domain codes, which can be used to reduce sidelobe interference and to improve signal reception.

In one or more embodiments, the transmitter circuits 118 may apply the space-time waveform to control the magnitude of the signal that results from the combination of the various transmitted signals for different directions. The weight matrix $W$ stores values that determine the configuration of various hardware components of the transmitter circuits 118 when the space-time waveform is being transmitted. As such, the beamforming weight matrix $W$ may determine the physical configuration of elements such as power amplifiers, amplitude controllers, and/or adjustable phase shifters in a manner to achieve a particular beamforming configuration of the transmitted signals. In one or more embodiments, the beamforming weight matrix $W$ may be a one-dimensional array that includes a number of values equal to the number of transmitters being used for beamforming within the radar system. The $i^{th}$ row of the weight matrix $W$, i.e., $W_i$, may represent the weight applied at the $i^{th}$ transmitter circuit 118. The weights defined by the weight matrix $W$ may be applied digitally in MIMO radar systems (e.g., via control signals transmitted by the MCPU 104 or by the waveform module 121 to components of the transmitter circuits 118 (such as power amplifiers, phase shifters, other circuit elements or any combination thereof), that are within the signal path of the transmitter circuits 118 of the radar system 101. In one or more embodiments, the transmitter circuits 118 apply the beamforming weights from the beamforming weight matrix $W$ to the transmit antenna array so that the output from the multiple antenna elements 126 combine to enhance the total signal strength along certain directions (selected directions or angles). Consequently, the beamforming-based transmitter can electronically steer the radar signal beams without physical movement of the antenna elements 126. The use of transmit beamforming can allow for better interference resilience and better power management in the radar system 101. In a similar manner, the beamforming weight matrix $W$ generated by waveform module 121 may enable the radar system 101 to properly receive and process reflections of the transmitted signal received at the receive antenna elements $RX_{1,1}$ - $RX_{1,N}$. The received radar reflection signals may be processed to identify potential targets objects indicated by the reflection signals, as well as attributes (e.g., range or distance, velocity, angle) of those various target objects that are then passed to the vehicle's ADAS or other vehicle systems.

The field of vision (FOV) or viewing area of the radar system 101 may be subdivided into a number of different regions or sectors, referred to herein as angle bins. The beamforming weight matrix $W$ may be configured to cause the transmitter circuits 118 to transmit radar signals into the various regions or sectors to identify attributes of potential target objects that may be present within each of the regions or sectors. In typical radar systems, the radar signal transmitted into each region or sector is transmitted at full power, enabling the largest possible range of target object detection in each region or sector. Because in conventional radar systems radar signals are transmitted at maximum signal power to provide the longest range of target object detection at all times, that mode of operation can lead to significant levels of intra-radar system signal interference, as well as inefficient radar system operation in terms of power consumption.

To remedy these problems (and others), the radar system 101 may be configured to utilize beamforming operations via generation of appropriate beamforming weight vectors within waveform module 121 to control or optimize radar signal transmission power levels based upon the pre-determined information (such as the occupancy map data 146) retrieved from the MCPU 104 or the memory 112.

In an implementation, as illustrated in FIG. 1, occupancy map data 146 may be retrieved from the memory 112, or from another source. The occupancy map data may include information describing known structures or objects (typically static, but potentially including dynamic objects, too) that are in the vicinity of the vehicle 150, including static map information, and object data determined from detection performed by the radar system 101. On a particular roadway, for example, the occupancy map data may provide information as to the location of roadway guardrails that run along an edge of the roadway, the locations of buildings or other permanent structures such as bridges, tunnels, large geological formations (e.g., mountain sides or cliffs), significant vegetation (e.g., large trees), large pieces of road working equipment, or other street obstructions. More generally, the occupancy map data may include a data structure that describes the location of radar signal-blocking objects that are in the vicinity of the radar system 101. As such, the occupancy map can be thought of defining a space around the vehicle 150 into which the vehicle 150 may drive or maneuver (i.e., it is not valid for the vehicle to drive into or through the area designated by the occupancy map as contained radar signal-blocking objects, but the vehicle 150 could drive into regions that do not contain such objects). In some cases, the occupancy map defines, for a number of sectors radiating from the radar system (e.g., angle bins), a distance or range to the nearest radar signal-blocking object. In still further cases, the occupancy map may define the probability or likelihood that a radar-blocking object is located at a particular location in the vicinity of the radar system.

In one or more embodiments, the signals generated by the transmit antenna elements 126 may generate sidelobes that may result in noise in the received reflected waveforms. To reduce the effect of the sidelobes, the waveform module 121 may be configured to select one or more time-domain codes, which may be combined with the beamforming operation to include time-code data in the resulting waveform, producing a space-time waveform that can be transmitted by the transmitter circuits 118. In one or more embodiments, the time-domain codes may be selected to provide reduced correlation with respect to the reflected signals. The time-domain code information and beamforming spatial-domain information may be provided to the receiver circuits 128 and used for spatial-domain (angle-domain) matched filters and time-domain matched filters to extract direction of arrival and range data from the reflected signals and to enable fast autocorrelation of the range data to identify objects in the viewing area.

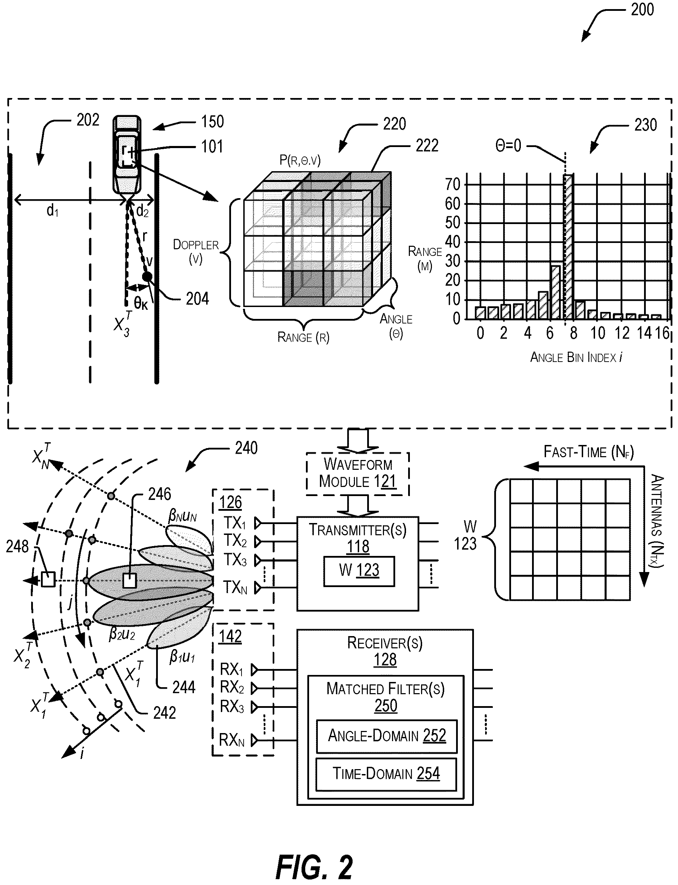

Referring now to FIG. 2, a conceptual diagram 200 of the radar system 101 including an input to receive an occupancy grid map 220 and a lane topology map 230 and receivers to receive reflected time-code information to reduce sidelobe interference, in accordance with various embodiments. In the illustrated example, the radar system 101 of a vehicle 150 may transmit multiple transmit TX signals in a view area. In this example, a vacant road 202 is shown that includes guard rails. The vehicle 150 may include the radar system 101 including a MIMO radar that uses a space-time coded matrix to control the transmitter circuit 118 to perform beamforming (space-domain) and data encoding (time-domain) to produce beams 242 that can be transmitted into a view area to detect targets within the drivable space by exploiting the occupancy map data 146 (in FIG. 1).

As discussed above, pre-determined information, such as an occupancy grid 220 or occupancy data map 230 may be received by the waveform module 121, which may be part of the transmitter circuits 118, the MCPU 104, or another circuit. The waveform module 121 may be configured to determine a beamforming weight vector and time-domain codes that can be combined to form a space-time waveform matrix $W$. The transmitter circuit 118 may cause the antenna elements 126 to radiate signals according to the determined the space-time waveform in a slow-time slot to estimate an angle parameter and a range parameter related to targets (object) in the view area.

In one or more embodiments, the signal processor 110 may receive the digital output signals from the receiver circuits 128 and may determine a probability ( $\mathbb{P}(i,j,k)$ ) that a cell indexed according to its range bin $i$, angle bin $j$, and Doppler bin $k$ is occupied. The entropy $H$ of the probability may be determined as follows:

$$H\big(\mathbb{P}(i,j,k)\big) = -\mathbb{P}(i,j)\log_2\big(\mathbb{P}(i,j,k)\big) - \big(1 - \big(\mathbb{P}(i,j,k)\big)\log_2\Big(1 - \big(\mathbb{P}(i,j,k)\big)\Big) \qquad (1)$$

The entropy $H$ may be used to determine a weighted detection probability as follows:

$$\max_{W} \sum_{k=1}^{N_d} \sum_{j=1}^{N} \sum_{i=1}^{N_j} H\big(\mathbb{P}(i,j,k)\big)P_d(i,j,k;W),$$

$$\text{Subject to } \|W[:,m]\|_2^2 \leq P_{TX} \forall \text{m}=1,\ldots,N_F. \qquad (2)$$

In Equation 2, $Ni$ represents a number of range bins in the drivable space along direction $i$, $N$ represents a number of angle bins, $Nj$ represents a maximum drivable space along direction $j$, Nd represents a number of doppler bins for each range-angle cell, and the term $P_d(i, j, k; W)$ corresponds to the probability of detecting a target in cell $(i,j,k)$ and is Gaussian distributed.

The resulting occupancy grid map 220 (which may be an example of the occupancy map data 146 in FIG. 1) may include a plurality of cells 222, depicted here as a data cube, representing doppler data $V$, range data $R$, and angle data $\theta$. The occupancy grid map 220 may be further processed to produce a lane topology map 230, which depicts the range to an object versus the angle index. In Equation 2, the weights that scale the detection probability are a function of the range, angle, and doppler bins subject to the space-time waveform $W$ 123 for each of the beams $m$ 244 being less than the transmit power quantified for each of the fast-time beams 244.

In one or more embodiments, the input to the radar device may include a map including one or more of a drivable region with lane information and grids with occupancy of targets. The transmitter circuits 118 may generate beams 244 in the space domain with time-domain codes for transmission via the antenna elements 126.

The transmitted signals may impinge $K$ point targets within the radar's field of view. The direction of departure of the beam 244 that impinges the $i$-th target may be defined as $\theta_i$. Considering a TX with half-wavelength spaced elements, the array response vector at the transmitter circuit 118 for direction $\theta_j$ may be defined as follows:

$$a(\theta_i) = [1, e^{-j\pi sin(\theta_i)}, e^{-j\pi 2 sin(\theta_i)}, \cdots, e^{-j\pi(N-1)sin(\theta_i)}]^T , \qquad (4)$$

where $a$ represents the array response vector of the array of transmitter elements 126. Each beam 242 has a beamforming gain along a direction $\beta_i$ and $x_i$ represents an $NF x 1$ unimodular fast-time code transmitted along the direction $i$. The space-time code $W$ may be determined as follows:

$$W = \beta_1 \boldsymbol{a}(\theta_1) \boldsymbol{x}_1^T + \beta_2 \boldsymbol{a}(\theta_2) \boldsymbol{x}_2^T + \cdots + \beta_N \boldsymbol{a}(\theta_N) \boldsymbol{x}_N^T, \tag{5}$$

The match filters 250 may include a range domain match filter may utilize a bank of correlators to determine a range to $K$ targets. Correlation with $X_i$ may be performed to determine targets along direction $i$. The targets are assumed to lie on the range-angle two-dimensional grid, and Equation 5 may be rewritten as follows:

$$W = \beta_1 \mu_1 x_1^T + \beta_2 \mu_2 x_2^T + \cdots + \beta_N \mu_N x_N^T \,,$$

$$\text{with } \mu_l * \mu_m = 0 \ \forall l \neq m \tag{6}$$

where $\mu_l$ may represent the $l^{th}$ column of the $N \times N$ discrete Fourier Transform (DFT) matrix and $x_i$ may represent the time-domain codes.

In the illustrated example, cells 246 and 248 are shown. Cell 246 may be indexed as $i, j$, and cells 248 may be indexed as $k_j$. At the radar receiver circuit 128, the reflected radar echoes (reflections) may be down-converted and sampled. The receiver circuit 128 may apply one or more matched filters 250. In one or more embodiments, the matched filters 250 may include two-dimensional matched filters that filters for range and angle to detect one or more targets. The match filters 250 may include an angle domain match filter 252 that may be implemented for each of the beamforming directions $\alpha(\theta_1), \alpha(\theta_2), ..., \alpha(\theta_N)$ to determine the direction of arrival (DoA). The receiver circuits 128 may be configured to estimate the DoA using a discrete Fourier transform (DFT), which may process a discrete grid of $N$ angle bins. In one or more embodiments, an $N$-sized DFT may be applied to the sampled signal measured by the array of antenna elements 142.

Assuming that the $K$ targets are positioned on the discrete grid described by the columns of the DFT matrix, the angles $\theta_k$ are such that $\pi sin(\theta_k)$ is an integer multiple of $2\pi/N_{tx}$. The output of the angle-domain matched filter 252 for direction $\theta_j$ with $j=1, 2, ... N_{tx}$ can be expressed as follows:

$$y(i,j) = \frac{\alpha_{i,j}\sqrt{P_{tx}}}{R_{i,j}^2}\beta_j r_{\{xj\ xj\}}[0] + \sum_{k\neq i}\frac{\alpha_{i,j}\sqrt{P_{tx}}}{R_{i,j}^2}\beta_j r_{\{xj\ xj\}}[i-k] + v(i,j), \tag{7}$$

where $y(i,j)$ represents the output of the two-dimensional matched filter, the term $\dfrac{\alpha_{i,j}\sqrt{P_{tx}}}{R_{i,j}^2}\beta_j r_{xjxi}[0]$ represents the response from the cell of interest, the second term corresponds to the response from other cells along the $j^{th}$ angle bin, and the term $v(i,j)$ represents the filtered noise. The term $\beta_j$ represents the beamforming gain along direction $j$, and $x_i$ represents the time-domain codes.

The second term in Equation 7 may represent the contribution to the matched filter output due to the presence of different targets within the same angle bin, which can cause false alarms and reduce the detection capabilities of the system. However, the false alarms can be reduced by using time-domain codes that have low correlation levels. In one or more embodiments, the output of the angle-domain matched filter 252 may be separable in the angle-domain such that each row of the matrix of the angle-domain matched filter 252 may include returns from the transmission of the respective time-domain waveform $x_i$. Following the angle-domain processing by the angle-domain matched filter 252, matched filtering may be performed for range estimation by applying a time-domain matched filter 254 for each time-domain waveform to the respective row of the matrix output of the angle-domain matched filter 252 to retrieve range information along each angle-grid direction.

For this range estimation, when the $(i,j)^{th}$ angle-range bin contains a target indexed as $k$, the autocorrelation vector $r_x$ in the output of the angle-range matched filter $y(i,j)$ in Equation 7 may be defined as follows:

$$r_{xx}(n) = \sum_l^L x(l)x^*(l-n) \tag{8}$$

where $L$ represents the length in samples of each baseband waveform transmitted at each transmitter element 126 and $n$ represents the selected transmitter element 126.

It should be appreciated that the space-time code matrix $W$ is separable in space and time and can be used separately to perform time-domain matched filtering for each direction on the angle grid using the one or more time-domain matched filters 254. When the number of receivers $N_{rx}$ is equal to the number of transmitters $N_{tx}$, the time-domain component becomes separable along the different directions of the angle grid.

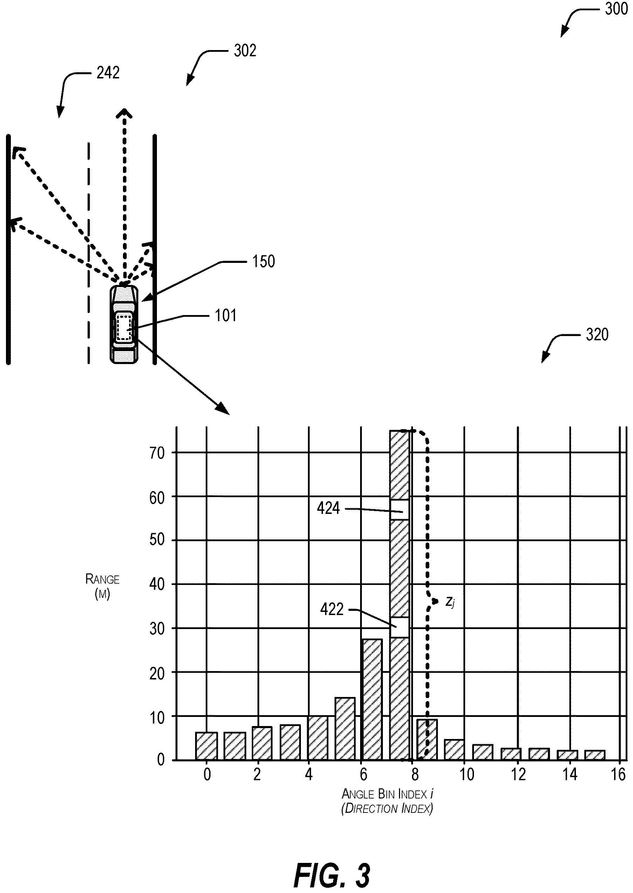

FIG. 3 depicts images, generally indicated at 300, that include a lane topology map 302 and a drivable space map 320 determined by a system including a radar system 101, in accordance with various embodiments. In the illustrated example, a radar device 102 of the automobile 150 may emit radar signals, generally indicated at 242 and may receive reflected signals in response thereto. The radar system 101 may determine range, angle, and Doppler information related to the reflected signals and may correlate the data to determine a drivable space map 320.

In the drivable space map 320, the distance $z_j$ represents a drivable space until a first obstacle in the direction $i$. The drivable space map 320 may indicate the drivable distance in terms of range bins, where the distance represents the space between the vehicle and the closest boundary (e.g., buildings, guard rails, and so on) along each angle-grid direction. The design of the time-space code $W$ may maximize the probability of detection at each $(i,j)$ cell with uncertain targe occupancy within the drivable space.

Assuming that $\alpha_k$ is proportional to the radar cross section (RCS) of the target and that it follows a complex Gaussian distribution with a unitary variance (for simplicity), the probability of detecting a target $k$ in the $(i,j)^{th}$ bin may be determined as follows:

$$P_d\left(i,j;\{\beta_i\}_{i=1}^{N_{rx}},\{x_i\}_{i=1}^{N_{rx}}\right) = Q\left(Q^{-1}(P_{FA}) - \sqrt{\frac{\frac{P_{tx}}{r_i^4}\left|\beta_i r_{\{x_i x_i\}}[0]\right|^2}{\sigma^2+\sum_{p\neq k}^{K_i}\frac{P_{tx}\left|\beta_i r_{\{x_i x_i\}}[d_p]\right|^2}{r_p^4}}}\right) \tag{9}$$

where the term under square root represents the ratio between the signal power at the output of the matched filter and the noise power plus the power of the shadowing terms from other targets in the same angle bin. As $Q(\cdot)$ is an increasing function, the probability of detection grows with the ratio between the signal power and the noise plus inter-target shadowing. Additionally, the term $d_p$ may represent the range of the $p^{th}$ target, and ki may represent the number of targets along direction $i$.

To determine the weighted probability of detection at each cell, the weights in Equation 7 may be chosen based on the information entropy of the occupancy probability at each cell. The information entropy of the occupancy probability measures the uncertainty of a target being present in a cell of interest. Since the transmitted signal includes time-domain codes, the entropy to weight the probability of detection is a function of both the space-domain codes and the time-domain codes. Considering a single Doppler bin ($N_d$=1), the maximization of the weighted detection probability can be written as follows:

$$\max_W \sum_{j=1}^N \sum_{i=1}^{N_i} H\left(\mathbb{P}(i,j)\right)P_d(i,j;W), subject\ to\ \|W[:,m]\|_2^2 \leq P_{tx}\ \forall m = 1,\ldots,N_F \tag{10}$$

where H() represents the information entropy function. The constraint in Equation 10 ensures that the radiated power is limited, i.e., $\|w_l\|_2^2 \leq 1\ \forall l = 1,\ldots,L$. For a waveform with a structure according to Equation 7 above, it holds that limit can be determined as follows:

$$\|w_l\|_2^2 = \left\|\sum_i \beta_i \alpha_{N_{rx}}(\theta_i)x_i[l]\right\|_2^2 = N_{rx}\sum_i|\beta_i x_i[l]|^2 \tag{11}$$

where the last equality follows from the orthogonality of the DFT matrix. The maximization equation 10 is a non-concave problem with a non-convex constraint. Considering only the effects of noise, the probability function $P_d$ in Equation 10 depends only on the signal-to-noise ratio, such that the maximization depends on the design of the time-domain codes. To decouple the constraint from the design of the time-domain codes $x_i$, the time-domain codes may be implemented as a vector of all 1 values having a vector length $N_{rx}$. The power constraint then simplifies to the following inequality:

$$\sum_i|\beta_i x_i[l]|^2 \leq \frac{1}{N_{tx}}\ \forall l, \tag{12}$$

which controls the total beamforming gain of the array of transmitter elements 126. Equation 10 can then be solved independently of the time-domain codes.

To determine the range data, the time-domain waveforms $x_i$ may be selected to reduce the contribution to the output of the angle-domain matched filter 252 due to different targets being present within the same angle bin. Recognizing that, in a given direction $i$, targets may be present up to a distance equal to the drivable range $z_i$. To reduce the contribution from different targets within the angle-bin of interest, the autocorrelation of the $i^{th}$ time-domain code $r_{xi}$ can be minimized for lags that are less than $z_i$. The minimized autocorrelation can be determined as follows:

$$\min_{\{x_i\}_{i=1}^{Nrx}} \sum_{l=-z_i+1}^{z_i-1} |r_{xi}[l]|^2 \tag{13}$$

such that $|x_i| = 1$ and $\forall i = 1, ..., N_{rx}$.

It is assumed that reflections from boundaries or from targets outside drivable space can be mitigated using static clutter removal techniques. Solving the minimization problems may yield sequences that reduce the unwanted contribution to the output of the matched filters due to the targets located within the road boundaries and along the same direction of the target of interest. After computing the beam gain $\beta_i$ and the time-domain codes $x_i$, the space-time code can be readily obtained using Equation 6.

The drivable space map 320 is depicted as a bar graph in which the various bars may represent data determined from the various angle (directional) bins of index $i$. A bin corresponding to bin 0 may be indicated at 422, for example, while a bin k may be indicated at 424. In one or more embodiments, the radar system 101 may be configured to determine the time-domain fast-time codes such that the autocorrelation function's sidelobes level within $d_j$ is minimized according to the following equation:

$$\min_{x_j} \sum_{k=1}^{N_j} w_k \left| \mathbf{r}_{x_j x_j}[k] \right|^2, \tag{14}$$

such that $|x_j[k]| = 1 \ \forall k = 1, ... , N_F$.

In one or more embodiments, the radar system 101 may be a multi-input multi-output (MIMO) radar that has the ability to shape the beam at the transmitter circuit 118 and to estimate the direction of arrival of the reflected signals at the receiver circuit 126. The beams at the radar transmitter circuit 118 may be configured using side-information (e.g., the drivable space map 320, occupancy grid map 220 (in FIG. 2), other data, or any combination thereof) that is available about the environment being sensed. The radar system 101 may be configured to adjust its transmitted waveform based on the information provided by the side-information.

The fully-digital antenna elements 126 may allow the transmission of separate time-domain waveforms at each antenna element 126, which can be exploited to increase the detection capabilities of the radar system 101. When occupancy information about the environment is available, the space-time waveform produced by the radar system 101 may be optimized to enhance detection in the areas where the presence of targets is uncertain.

In one or more embodiments, the transmitter circuit 118 may be configured to transmit space-time codes, which may be separable in the temporal domain and the spatial domain. The spatial-domain beams may be configured to focus the transmit power toward regions of high occupancy uncertainty, while the time-domain codes may be configured to enhance target detection at the output of the temporal matched filter for targets within the areas with high occupancy uncertainty.

The variable $\alpha_{i,j}$ may be proportional to the radar cross-section (RCS) of a target. Referring to the maximized entropy weighted detection probability in Equation 2 above, the probability of detection $P_d$ of a target may be understood as follows:

$$P_d(i, j, k; W) = Q(Q^{-1}(P_{fa}) - \sqrt{SINR(i, j; W)}) \tag{15}$$

where Q represents the Q function, $P_{fa}$ represents probability of false alarm, and SINR represents the signal-to-interference-plus-noise ratio for the cell.

The signal-to-interference-plus-noise ratio (SINR) may be determined according to the following equation:

$$SINR(i, j) = \frac{\frac{|\alpha_{i,j}|^2 P_{tx}}{R_i^4} |\beta_j|^2 \mathbf{r}_{x_j x_j}[0]^2}{\sum_{k \neq i} \frac{|\alpha_{k,j}|^2 P_{tx}}{R_k^4} |\beta_j|^2 |\mathbf{r}_{x_j x_j}[i-k]|^2 + \sigma^2} \tag{16}$$

where the numerator represents the signal power and the denominator represents the power response from other cells along angle bin $j$ plus a noise factor $\sigma^2$.

The maximum entropy equation 2 may be rewritten to include the beamforming gain as follows:

$$\max_{W} \sum_{j=1}^{N} \sum_{i=1}^{N_j} H\big(\mathbb{P}(i,j)\big) P_d \left(i, j, \beta, x_{i\,j=2}^{N}\right), \text{ subject to } \|\beta\|_2^2 \leq P_{tx}; \ |x_j| = 1 \forall j \qquad (17)$$

To design the space-time code W at the transmitter circuit 118 (or at the radar controller 108), the two-dimensional occupancy map defined over the range-angle bins is determined. In an example, the term $\mathbb{P}(i,j)$ is the probability that there is a target in the (i,j)$^{th}$ bin. The beamforming gain may be optimized by assuming ideal fast-time codes $x_1$, $x_2$, ..., and $x_N$. The range $r$ to a target or object can be determined for each bin as follows:

$$r_{xi,xj}[n] = \delta[n] = \begin{cases} 1, & n = 0 \\ 0, & otherwise \end{cases} \qquad (18)$$

It can be observed that the Gaussian distributed response from other cells monotonically increases with the SINR. Accordingly, the SINR is increased by minimizing the power response from other cells along each direction $j$ as follows:

$$Minimize \sum_{k \neq i, k=1} \frac{|\alpha_{k,j}|^2 P_{tx}}{R_k^4} |\beta_j|^2 |\mathbf{r}_{x_j x_j}[i-k]|^2, \text{ where}$$

$$\left| x_j[\text{n}] \right| = 1 \ \forall n = 1, \dots, N_F, \forall j. \qquad (19)$$

In one or more embodiments, the transmitter circuit 118 may periodically transmit a burst of $M$ pulses in one radar-coherent processing interval (CPI). The transmit power may be indicated by $P_{tx}$. The transmitted signal may impinge K point targets within the radar's field of view. The direction of departure associated with the kth target may be defined as $\theta_k$.

The radar beams emitted by the antenna elements 126 of the transmitter 118 may produce sidelobes 244 that may introduce interference. To reduce the effects of such sidelobes 244, the receiver circuit 128 or the signal processor 108 may process the received data to minimize the weighted integrated sidelobe level of the fast-time autocorrection according to the following equation:

$$\min_{x_j} \sum_{k=1}^{N_j} w_k \left| r_{x_i x_j[k]} \right|^2 \qquad (20)$$

such that |$x_j$[k]| = 1 VK = 1, ... , $N_F$.

Each transmit beam from the radar system 101 may include a time-domain code ( $X_j^T$ ), where $T$ represents the time and $j$ represents the angle bin index. The weight w can be chosen as follows:

$$w_k = \begin{cases} 1, & if \ 1 \leq k \leq N_j \\ 0, & if \ k > N_j \end{cases}, \qquad (21)$$

where $N_j$ represents the range bin index associated with the maximum drivable range along direction $j$.

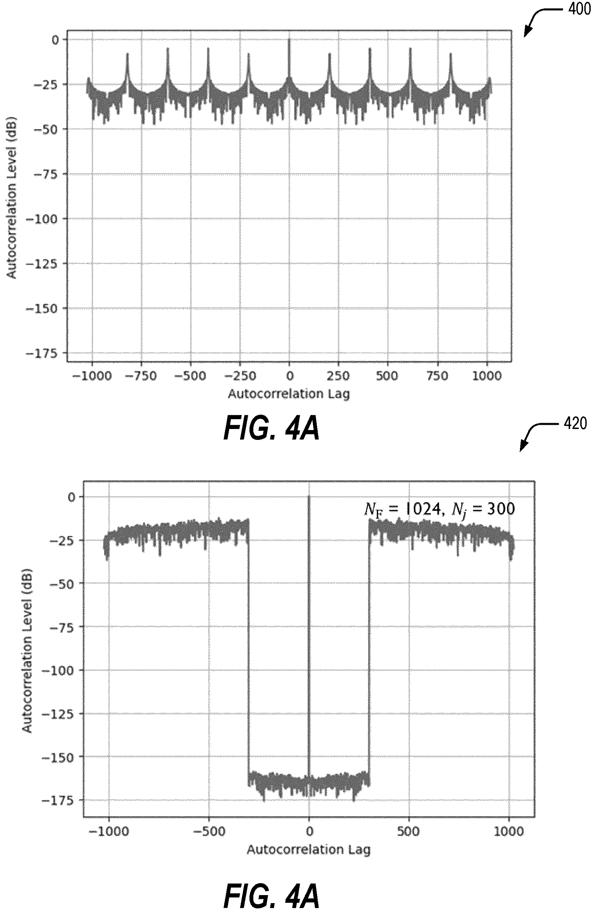

FIG. 4A depicts a graph 400 of autocorrelation level versus autocorrelation lag for a Zadoff-Chu waveform determined by a conventional radar system. In this example, the autocorrelation function is shown for a selected bin. In this example, the maximum distance at which a target could be located was approximately 40 meters, which corresponds to approximately 200 range bins. The autocorrelation of the Zadoff-Chu function may be approximately -45 dB across the region of interest.

FIG. 4B depicts a graph 420 of autocorrelation level versus autocorrelation lag for the radar system of FIGs. 1-2, in accordance with various embodiments. In this example, the time-space code implementation was used together with the autocorrelation function that is directed to the region of interest. In this example, using the prior information (drivable space map or occupancy grid) together with the space-domain and time-domain processing of the reflected signal may produce autocorrelation levels up to 125 dB less in magnitude as compared to the autocorrelation graph 400 in FIG. 4A.

This reduction in the autocorrelation graph ensures that at the output of the time-domain matched filters 254 the return due to targets within the same angle bin as the target cell of interest is minimized. Outside of the region of interest, the designed waveform may exhibit higher correlation than the Zadoff-Chu sequence. However, the prior information (drivable space map or occupancy grid) makes it known that relevant targets do not occupy those regions, so the higher correlation outside of the region of interest does not impact performance within the drivable range. Returns from static targets that appear outside the drivable range can be mitigated using static clutter removal techniques.

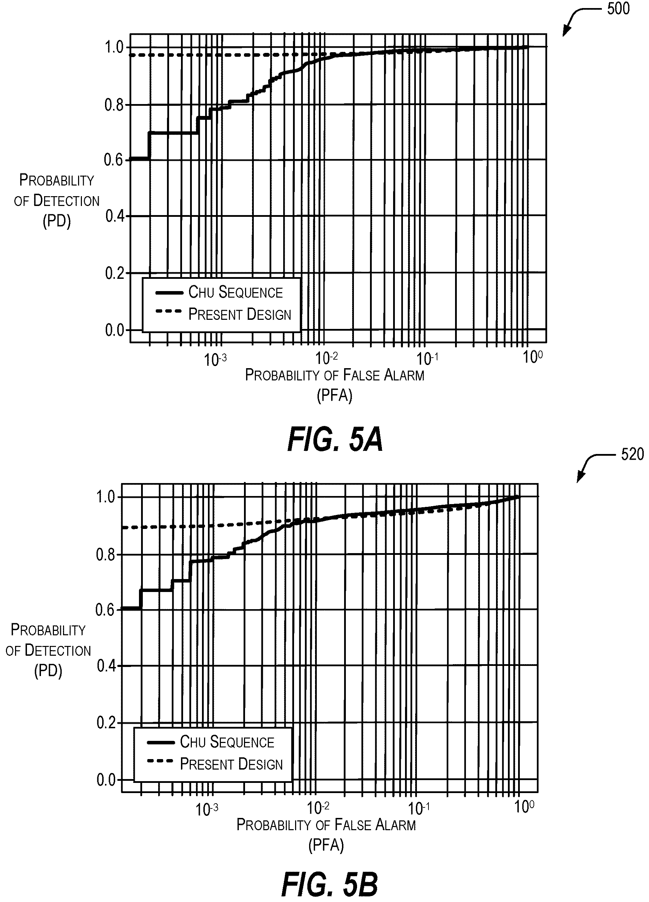

The space-time waveform design may provide a significant improvement in the probability of correct object detection, even as the probability of a false alarm increases. Examples of the performance results are described below with respect to FIGs. 5A and 5B.

FIG. 5A depicts a graph 500 of probability of detection versus probability of false alarm for a Zadoff-Chu waveform (sequence) and for the radar system of FIGs. 1-2 with a signal-to-noise ratio of 10 decibels, in accordance with various embodiments. The waveforms depict the receiver operating characteristic (ROC) curves of the receiver circuit 128 for target detection. Assuming twenty (20) targets are located at random distances from the radar along each grid direction, the targets have a random radar cross section (RCS) that follow a Gaussian distribution with unitary variance. The noise is scaled such that the signal-to-noise ratio (SNR) for the unitary RCS target is 10 dB. In this example, the number of samples $N$ was 1024, the drivable space in range bins $N_j$ was 300, the number of targets was fifty, and the signal power per target was zero decibels. The technique described above with respect to the radar system 101 outperformed the Zadoff-Chu algorithm by approximately 0.37 dB at a probability of false alarm of approximately $10^{-4}$ and continued to outperform the Zadoff-Chu algorithm until the probability of false alarm is greater than $10^{-2}$.

FIG. 5B depicts a graph 520 of probability of detection versus probability of false alarm for a Zadoff-Chu waveform (sequence) and for the radar system of FIGs. 1-2 with a signal-to-noise ratio of 0 decibels, in accordance with various embodiments. In this example, the number of samples $N$ was 1024, the drivable space in range bins $N_j$ was 300, the number of targets was fifty, and the signal power per target was zero decibels. The technique described above with respect to the radar system 101 outperformed the Zadoff-Chu algorithm by approximately 0.30 dB at a probability of false alarm of approximately $10^{-4}$ and continued to outperform the Zadoff-Chu algorithm until the probability of false alarm is approximately $10^{-2}$.

In the graphs of FIGs. 5A and 5B, the radar system 101 is shown to achieve higher probability of detection than systems using the Zadoff-Chu waveforms. In another implementation, the radar system 101 outperformed systems using the Zadoff-Chu waveforms by up to 0.5 dB for a $P_{FA}$ of $10^{-4}$. By minimizing the time-domain autocorrelation function within $z_i$, the proposed approach can more reliably detect multiple targets within the same angle bin are detected.

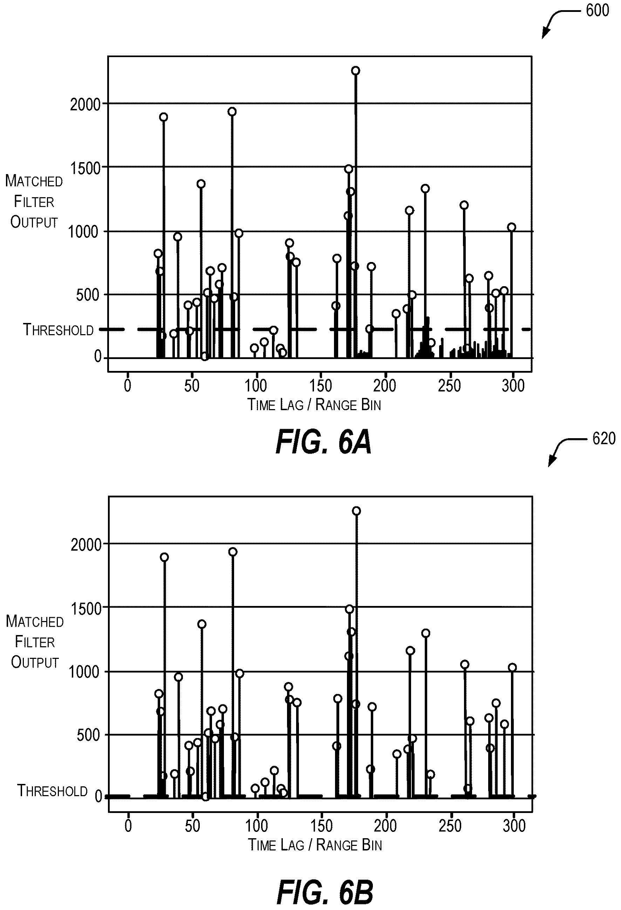

FIG. 6A depicts a graph 600 of a matched filter output versus time lag / range bin for a Zadoff-Chu sequence. The graph 600 is shown for a system having an SNR of 10 dB, and the threshold is fixed to have a probability of false alarm equal to 0.005. In this example, the probability of detection is approximately 0.78 (78%).

FIG. 6B depicts a graph 620 of the matched filter output for a designated sequence of the radar system 101 of FIGs. 1-2, in accordance with various embodiments. The graph 600 is shown for a system having an SNR of 10 dB, and the threshold is fixed to have a probability of false alarm equal to 0.005. In this example, the probability of detection is approximately 0.98 (98%). The radar system 101 can achieve a higher probably of detection for a fixed probability of false alarm due to the reduced sidelobe levels within the range bins corresponding to the drivable range.

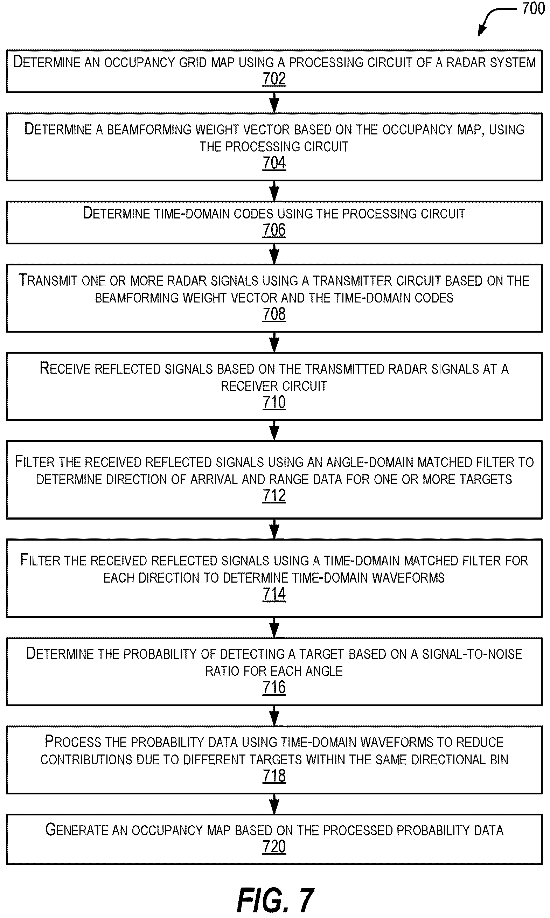

FIG. 7 depicts a flow diagram of a method 700 of generating an occupancy map based on space-code data and time-code data, in accordance with various embodiments. At 702, the method 700 may include determining an occupancy grid map using a processing circuit of a radar system

At 704, the method 700 may include determining a beamforming weight vector based on the occupancy map, using the processing circuit. In one or more embodiments, the beamforming weight vector may include multiple weight vectors forming a matrix.

At 706, the method 700 may include determining time-domain codes using the processing circuit. The time-domain codes may be determined for each angle or each beam of a transmitter circuit.

At 708, the method 700 may include transmitting one or more radar signals using a transmitter circuit based on the beamforming weight vector and the time-domain codes. In one or more embodiments, the time-domain codes may be combined with the beamforming weight vector information to produce multiple radar beams including the time-domain codes.

At 710, the method 700 may include receiving reflected signals based on the transmitted radar signals at a receiver circuit. The reflected signals may be indicative of objects or targets within a viewing area of the radar system 101.

At 712, the method 700 may include filtering the received reflected signals using an angle-domain matched filter to determine direction of arrival and range data for one or more targets. The angle-domain matched filter may be used to determine data for a plurality of angle bins.

At 714, the method 700 may include filtering the received reflected signals using a time-domain matched filter for each direction to determine time-domain waveforms. The time-domain matched filter may recover the time-domain codes from the waveform and may use the time-domain codes to autocorrelated the data from the reflected signals.

At 716, the method 700 may include determining the probability of detecting a target based on a signal-to-noise ratio for each angle. In one or more embodiments, the probability of detecting a target may be determined by the receiver circuit 126 or by a radar process.

At 718, the method 700 may include processing the probability data using time-domain waveforms to reduce contributions due to different targets within the same directional bin. In one or more embodiments, the time-domain codes may be used for autocorrelating the data, reducing sidelobe interference.

At 720, the method 700 may include generating an occupancy map based on the processed probability data.

In conjunction with the systems, methods, devices, and graphs described above with respect to FIGs. 1-7, a radar system 101 is disclosed that includes one or more transmitter circuits 118 coupled to a plurality of antenna elements 126. The transmitter circuits 118 may be configured to determine prior information about a viewing area of the radar, to determine time-domain codes, and to perform beamforming to selectively transmit one or more beams including the time-domain codes toward the viewing area. The radar system 101 may include one or more receiver circuits 128 coupled to a plurality of antenna elements 142. The receiver circuits 128 may be configured to determine the prior information about the viewing area, to receive reflected signals from the viewing area, to determine space-domain data based on the reflected signals, to determine time-domain data based on the reflected signals, and to determine one or more of an occupancy grid or a drive lane map corresponding to the viewing area based on the space-domain data and the time-domain data.

While the above-discussion is primarily focused on a MIMO space-time radar system, it should be understood that the methods may be used with other active sensing circuits, such as light-detection and ranging (LiDAR) circuits, ultrasound circuits, other active sensing circuits, and so on. The one or more embodiments may be further understood in view of the Examples presented below.

Example 1: A method may include receiving, using a radar system, pre-determined information about a viewing area with respect to the radar system; determining, by at least one transmitter circuit of the radar system, a beamforming weight vector defining spatial-domain beams based on the pre-determined information; determining, by the at least one transmitter circuit, one or more time-domain codes based, at least in part, on the pre-determined information; combining, using the at least one transmitter circuit, the spatial-domain beams and the one or more time-domain codes to form a space-time waveform; and transmitting, using at least one transmitter circuit of the radar system, the space-time waveform at selected angles toward the viewing area of the radar system.

Example 2: The method of Example 1, where the pre-determined information includes one or more of range data, angle data, or Doppler data corresponding to one or more objects within the viewing area.

Example 3: The method of any of Examples 1 or 2, where the pre-determined information includes one or more of an occupancy map, drive lane topology information including a drivable region with lane information, or an occupancy grid.

Example 4: The method of any of Examples 1-3, where determining the pre-determined information includes retrieving the pre-determined information from a memory.

Example 5: The method of any of Examples 1-4, where determining the beamforming weight vector may include determining, at the at least one transmitter circuit, one or more occupancy probabilities based on the pre-determined information; and determining, at the at least one transmitter circuit, the beamforming weight vector based on the one or more occupancy probabilities.

Example 6: The method of any of Examples 1-5, where determining the one or more time-domain codes includes determining one or more time-domain waveforms to have a reduced correlation relative to one another.

Example 7: The method of any of Examples 1-6, where determining the one or more time-domain codes includes determining a time-domain waveform for each selected angle.

Example 8: The method of any of Examples 1-7, further including receiving, using at least one receiver circuit of the radar system, reflected signals from the viewing area of the radar system, the reflected signals related to the space-time waveform; determining, at the at least one receiver circuit, space-domain data including probability data indicative of a probability of one or more objects within the viewing area with respect to the selected angles based on the reflected signals; determining, at the at least one receiver circuit, time-domain data corresponding to the time-domain codes from one or more of the reflected signals or the space-domain data; and determining, for each of the one or more selected angles, the probability of an object within a selected region of the viewing area based on the space-domain data and the time-domain data using the at least one receiver circuit.

Example 9: The method of Example 8, where determining the space-domain data includes applying an angle-domain matched filter to determine direction of arrival and range data for each of the selected angles.

Example 10: The method of Example 8, where determining the time-domain data includes applying a time-domain matched filter to determine the time-domain data corresponding to the time-domain codes of the space-time waveform.

Example 11: The method of Example 8, where determining the time-domain data includes correlating range information based on the time-domain data to determine one or more targets in a direction of the selected angles.

Example 12: The method of Example 11, where correlating the range information includes reducing weighted sidelobe data based on the time-domain data.

Example 13: The method of any of Examples 1-12, where the radar system is coupled to one of a vehicle or a movable robotic system.

Example 14: The method of any of Examples 1-13, where transmitting the space-time waveform toward the viewing area may include transmitting a plurality of shaped beams toward the viewing area, and where a beamforming gain or beam pattern varies at different locations within the viewing area.

Example 15: The method of any of Examples 1-14, where transmitting the space-time waveform toward the viewing area includes transmitting a plurality of shaped beams toward the viewing area, each shaped beam including a selected time-domain code.

Example 16: A radar system may include one or more transmitter circuits configured to transmit a space-time waveform toward a viewing area, the space-time waveform including one or more shaped beams including time-domain codes; one or more receiver circuits configured to receive reflected signals related to the space-time waveform; and a radar processor configured to retrieve pre-determined occupancy data identifying a location of an object with respect to the automotive radar system; determine, using the pre-determined occupancy data, a beamforming weight vector; determine, using the pre-determined occupancy data, one or more time-domain codes; generate the space-time waveform including one or more shaped beams including the one or more time-domain codes and based on the beamforming weight vector; and transmit, using the one or more transmitter circuits, the space-time waveform toward the viewing area.

Example 17: The radar system of Example 16, where the one or more time-domain codes are determined to reduce autocorrelation of sidelobe information in reflected signals received by the one or more receiver circuits.

Example 18: The radar system of any of Examples 16 or 17, where one or more of a beamforming gain, a beam pattern, or a time-domain code varies with respect to locations within the viewing area.

Example 19: The radar system of any of Examples 16-18, where each of the one or more receiver circuits may include an angle-domain matching filter based on the space-time waveform to determine direction of arrival data related to one or more angles; and a time-domain matching filter based on the space-time waveform to correlate time-domain code data to determine range information with reduced sidelobe interference.

Example 20: The radar system of Example 19, where the radar processor is configured to determine one or more of an updated occupancy grid or an occupancy map based on the determined direction of arrival data and the determined range information.

The preceding detailed description is merely illustrative in nature and is not intended to limit the embodiments of the subject matter or the application and uses of such embodiments. As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, or detailed description.

The connecting lines shown in the various figures contained herein are intended to represent exemplary functional relationships and/or physical couplings between the various elements. It should be noted that many alternative or additional functional relationships or physical connections may be present in an embodiment of the subject matter. In addition, certain terminology may also be used herein for the purpose of reference only, and thus are not intended to be limiting, and the terms "first", "second" and other such numerical terms referring to structures do not imply a sequence or order unless clearly indicated by the context.

The foregoing description refers to elements or features being "connected" or "coupled" together. As used herein, unless expressly stated otherwise, "connected" means that one element is directly joined to (or directly communicates with) another element, and not necessarily mechanically. Likewise, unless expressly stated otherwise, "coupled" means that one element is directly or indirectly joined to (or directly or indirectly communicates with, electrically or otherwise) another element, and not necessarily mechanically. Thus, although the schematic shown in the figures depict one exemplary arrangement of elements, additional intervening elements, devices, features, or components may be present in an embodiment of the depicted subject matter.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims.

**Claims**

1.  A method comprising:

    receiving, using a radar system, pre-determined information about a viewing area with respect to the radar system;
    determining, by at least one transmitter circuit of the radar system, a beamforming weight vector defining spatial-domain beams based on the pre-determined information;
    determining, by the at least one transmitter circuit, one or more time-domain codes based, at least in part, on the pre-determined information;

combining, using the at least one transmitter circuit, the spatial-domain beams and the one or more time-domain codes to form a space-time waveform; and

transmitting, using at least one transmitter circuit of the radar system, the space-time waveform at selected angles toward the viewing area of the radar system.

2. The method of claim 1, wherein the pre-determined information comprises one or more of range data, angle data, or Doppler data corresponding to one or more objects within the viewing area.

3. The method of claim 1 or 2, wherein the pre-determined information comprises one or more of an occupancy map, drive lane topology information including a drivable region with lane information, or an occupancy grid.

4. The method of any preceding claim, wherein receiving the pre-determined information comprises retrieving the pre-determined information from a memory.

5. The method of any preceding claim wherein determining the beamforming weight vector comprises:

determining, at the at least one transmitter circuit, one or more occupancy probabilities based on the pre-determined information; and

determining, at the at least one transmitter circuit, the beamforming weight vector based on the one or more occupancy probabilities.

6. The method of any preceding claim, wherein determining the one or more time-domain codes comprises determining one or more time-domain waveforms to have a reduced correlation relative to one another.

7. The method of any preceding claim, wherein determining the one or more time-domain codes comprises determining a time-domain waveform for each selected angle.

8. The method of any preceding claim, further comprising:

receiving, using at least one receiver circuit of the radar system, reflected signals from the viewing area of the radar system, the reflected signals related to the space-time waveform;

determining, at the at least one receiver circuit, space-domain data including probability data indicative of a probability of one or more objects within the viewing area with respect to the selected angles based on the reflected signals;

determining, at the at least one receiver circuit, time-domain data corresponding to the time-domain codes from one or more of the reflected signals or the space-domain data; and

determining, for each of the one or more selected angles, the probability of an object within a selected region of the viewing area based on the space-domain data and the time-domain data using the at least one receiver circuit.

9. The method of claim 8, wherein determining the space-domain data comprises applying an angle-domain matched filter to determine direction of arrival and a time-domain matched filter to determine the time-domain data corresponding to the time-domain codes of the space-time waveform.

10. The method of claim 8 or 9, wherein determining the time-domain data comprises correlating range information based on the time-domain data to determine one or more targets in a direction of the selected angles by reducing weighted sidelobe data based on the time-domain data.

11. The method of any preceding claim, wherein transmitting the space-time waveform toward the viewing area comprises:

transmitting a plurality of shaped beams toward the viewing area, and

wherein a beamforming gain or beam pattern varies at different locations within the viewing area.

12. The method of claim 1, wherein transmitting the space-time waveform toward the viewing area comprises transmitting a plurality of shaped beams toward the viewing area, each shaped beam including a selected time-domain code.

13. A radar system comprising:

one or more transmitter circuits configured to transmit a space-time waveform toward a viewing area, the space-time waveform comprising one or more shaped beams including time-domain codes;
one or more receiver circuits configured to receive reflected signals related to the space-time waveform; and
a radar processor configured to:

retrieve pre-determined occupancy data identifying a location of an object with respect to the radar system;
determine, using the pre-determined occupancy data, a beamforming weight vector;
determine, using the pre-determined occupancy data, one or more time-domain codes;
generate the space-time waveform including one or more shaped beams including the one or more time-domain codes and based on the beamforming weight vector; and
transmit, using the one or more transmitter circuits, the space-time waveform toward the viewing area.

14. The radar system of claim 13, wherein the one or more time-domain codes are determined to reduce autocorrelation of sidelobe information in reflected signals received by the one or more receiver circuits.

15. The radar system of claim 13 or 14, wherein each of the one or more receiver circuits comprises:

an angle-domain matching filter based on the space-time waveform to determine direction of arrival data related to one or more angles; and
a time-domain matching filter based on the space-time waveform to correlate time-domain code data to determine range information with reduced sidelobe interference; and .

, wherein the radar processor is configured to determine one or more of an updated occupancy grid or an occupancy map based on the determined direction of arrival data and the determined range information.

*FIG. 1*

**FIG. 2**

FIG. 3

FIG. 4A

$N_F = 1024, N_j = 300$

FIG. 4A

FIG. 5A

FIG. 5B

FIG. 6A

FIG. 6B

700

DETERMINE AN OCCUPANCY GRID MAP USING A PROCESSING CIRCUIT OF A RADAR SYSTEM
702

DETERMINE A BEAMFORMING WEIGHT VECTOR BASED ON THE OCCUPANCY MAP, USING
THE PROCESSING CIRCUIT
704

DETERMINE TIME-DOMAIN CODES USING THE PROCESSING CIRCUIT
706

TRANSMIT ONE OR MORE RADAR SIGNALS USING A TRANSMITTER CIRCUIT BASED ON THE
BEAMFORMING WEIGHT VECTOR AND THE TIME-DOMAIN CODES
708

RECEIVE REFLECTED SIGNALS BASED ON THE TRANSMITTED RADAR SIGNALS AT A
RECEIVER CIRCUIT
710

FILTER THE RECEIVED REFLECTED SIGNALS USING AN ANGLE-DOMAIN MATCHED FILTER TO
DETERMINE DIRECTION OF ARRIVAL AND RANGE DATA FOR ONE OR MORE TARGETS
712

FILTER THE RECEIVED REFLECTED SIGNALS USING A TIME-DOMAIN MATCHED FILTER FOR
EACH DIRECTION TO DETERMINE TIME-DOMAIN WAVEFORMS
714

DETERMINE THE PROBABILITY OF DETECTING A TARGET BASED ON A SIGNAL-TO-NOISE
RATIO FOR EACH ANGLE
716

PROCESS THE PROBABILITY DATA USING TIME-DOMAIN WAVEFORMS TO REDUCE
CONTRIBUTIONS DUE TO DIFFERENT TARGETS WITHIN THE SAME DIRECTIONAL BIN
718

GENERATE AN OCCUPANCY MAP BASED ON THE PROCESSED PROBABILITY DATA
720

*FIG. 7*

Europäisches
Patentamt
European
Patent Office
Office européen
des brevets

# EUROPEAN SEARCH REPORT

**Application Number**

EP 25 20 0420

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | FOCANTE EDOARDO ET AL: "Situation-Aware Adaptive Transmit Beamforming for Automotive Radars", ICASSP 2024 - 2024 IEEE INTERNATIONAL CONFERENCE ON ACOUSTICS, SPEECH AND SIGNAL PROCESSING (ICASSP), IEEE, 14 April 2024 (2024-04-14), pages 8621-8625, XP034652991, DOI: 10.1109/ICASSP48485.2024.10447374 [retrieved on 2024-03-18] * the whole document * | 1-15 | INV. G01S7/02 G01S13/32 G01S13/42 G01S13/58 G01S13/66 G01S13/931 |
| A | LAN LAN ET AL: "Low sidelobes optimization with subarrays for space-time circulating LFMs", 2017 IEEE RADAR CONFERENCE (RADARCONF), IEEE, 8 May 2017 (2017-05-08), pages 73-77, XP033104034, DOI: 10.1109/RADAR.2017.7944174 [retrieved on 2017-06-07] * abstract * * paragraphs [000I], [00II]; figure 1 * | 1-15 | |
| A | CN 110 471 033 A (UNIV XIDIAN) 19 November 2019 (2019-11-19) * paragraphs [0001] - [0013] * | 1-15 | **TECHNICAL FIELDS SEARCHED (IPC)** G01S |
| A | CN 110 703 250 B (INST ELECTRONICS CAS) 7 December 2021 (2021-12-07) * paragraphs [0001], [0004], [0042]; figure 1 * | 1-15 | |

The present search report has been drawn up for all claims

| Place of search | Date of completion of the search | Examiner |
|---|---|---|
| Munich | 9 January 2026 | van Norel, Jan |

EPO FORM 1503 03.82 (P04C01)

## ANNEX TO THE EUROPEAN SEARCH REPORT
## ON EUROPEAN PATENT APPLICATION NO.

EP 25 20 0420

This annex lists the patent family members relating to the patent documents cited in the above-mentioned European search report.
The members are as contained in the European Patent Office EDP file on
The European Patent Office is in no way liable for these particulars which are merely given for the purpose of information.

09-01-2026

| Patent document cited in search report | | Publication date | Patent family member(s) | | Publication date |
|---|---|---|---|---|---|
| CN 110471033 | A | 19-11-2019 | NONE | | |
| CN 110703250 | B | 07-12-2021 | CN | 110703250 A | 17-01-2020 |
| | | | EP | 3819661 A1 | 12-05-2021 |
| | | | US | 2021132188 A1 | 06-05-2021 |

EPO FORM P0459

For more details about this annex : see Official Journal of the European Patent Office, No. 12/82